# EUROPEAN PATENT SPECIFICATION

(11) **EP 2 445 949 B1**
(45) Date of publication and mention of the grant of the patent: **25.03.2015**
(21) Application number: 10742926.8
(22) Date of filing: 14.06.2010
(51) Int. Cl.: C08G 59/42, C08L 63/00

(54) **HARDENER COMPOSITION FOR EPOXY RESINS**
HÄRTERZUSAMMENSETZUNG FÜR EPOXIDHARZE
COMPOSITION DE DURCISSEURS POUR DES RESINS D'EPOXY

(30) Priority: 22.06.2009 US 219019 P
(43) Date of publication of application: 02.05.2012
(73) Proprietor: Dow Global Technologies LLC, Midland, MI 48674 (US)
(72) Inventor: STORER, Joey, Midland MI 48640 (US); MERCER, William, Clute TX 77531 (US); HEARN, Robert, Lake Jackson TX 77566 (US); MULLINS, Michael, Houston TX 77030 (US)
(74) Representative: Beck Greener
(86) International application number: PCT/US2010/038512
(87) International publication number: WO 2011/005420

(56) References cited:
- WO-A1-98/18845
- WO-A1-98/31750
- US-A1- 2006 074 151
- Anonymous: "Sartomer products of electronic applications"[Online] 1 January 2008 (2008-01-01), pages 1-16, XP002607920 Sartomer Retrieved from the Internet: URL:http://www.sartomer.com/techlit/1521.p df> [retrieved on 2010-11-03]

## Description

### Field of the Invention

The present invention relates to compositions useful as crosslinkers for curing epoxy resins. More particularly, the present invention relates to a hardener composition useful as a crosslinker for curing epoxy resins. The epoxy resins, in turn, are used for example, in electrical laminates applications.

### Background of the Invention

It is known to make electrical laminates and other composites from a fibrous reinforcement and an epoxy-containing matrix resin. Examples of suitable processes usually contain the following steps:
(1) An epoxy-containing formulation is applied to or impregnated into a substrate by rolling, dipping, spraying, other known techniques and/or combinations thereof. The substrate is typically a woven or nonwoven fiber mat containing, for instance, glass fibers or paper.
(2) The impregnated substrate is "B-staged" by heating at a temperature sufficient to draw off solvent in the epoxy-containing formulation and optionally to partially cure the epoxy-containing formulation, so that the impregnated substrate can be handled easily. The "B-staging" step is usually carried out at a temperature of from 90°C to 210°C and for a time of from 1 minute to 15 minutes. The impregnated substrate that results from B-staging is called a "prepreg." The temperature is most commonly 100°C for composites and 130 °C to 200 °C for electrical laminates.
(3) One or more sheets of prepreg are stacked or laid up in alternating layers with one or more sheets of a conductive material, such as copper foil, if an electrical laminate is desired.
(4) The laid-up sheets are pressed at high temperature and pressure for a time sufficient to cure the resin and form a laminate. The temperature of this lamination step is usually between 100 °C and 230 °C, and is most often between 165 °C and 200 °C,. The lamination step may also be carried out in two or more stages, such as a first stage between 100 °C and 150 °C and a second stage at between 165 °C and 190 °C. The pressure is usually between 50 N/cm² and 500 N/cm². The lamination step is usually carried out for a time of from 1 minute to 200 minutes, and most often for 45 minutes to 90 minutes. The lamination step may optionally be carried out at higher temperatures for shorter times (such as in continuous lamination processes) or for longer times at lower temperatures (such as in low energy press processes).

Optionally, the resulting laminate, for example, a copper-clad laminate, may be post-treated by heating for a time at high temperature and ambient pressure. The temperature of post-treatment is usually between 120 °C and 250 °C. The post-treatment time usually is between 30 minutes and 12 hours.

It is conventional in the preparation of epoxy-containing laminates to incorporate into an epoxy resin composition a hardener (also referred to as a "curing agent" or a "crosslinking agent") in order to provide the crosslinking of the epoxy composition to form a thermoset resin. Various hardeners for epoxy resins are generally known including amines, phenolics, anhydrides, carboxylic acids, mercaptans and isocyanates. Epoxy resins can also homopolymerize by reacting with both nucleophilic and electrophilic species.

The current trend of the electrical laminates industry requires materials with improved dielectric properties including lower dielectric constant (Dk) and dissipation factor (Df); superior thermal properties including high glass transition temperature (Tg) and decomposition temperature (Td); and good processability. One known approach for improving laminate properties consists of curing a flame retardant epoxy resin with an anhydride hardener such as styrene-maleic anhydride copolymer (SMA). The known SMA hardener system has poor processability because a prepreg powder made with the known SMA hardener is easy to remove from a substitute such as a glass web, creating a lot of dust when the prepreg is handled (a so-called "mushroom" effect). Another known disadvantage of SMA hardeners is the difficulty in the control of flammability due to the presence of the polystyrene in the co-polymer and especially on increasing the total styrene content of the varnish. Additionally, systems with high styrene content tend to have depressed glass transition temperatures due to the high volume fractions of polystyrene in high-styrene-content hardeners.

It is therefore desired to provide a hardener system for epoxy resins without these disadvantages.

### Summary of the Invention

In an embodiment of the invention a composition is disclosed comprising, consisting of, or consisting essentially of: a) an epoxy resin; and b) a hardener comprising a copolymer of: i) an ethylenically unsaturated anhydride, and ii) a vinyl compound, wherein the vinyl compound is styrene or a styrene derivative and wherein the copolymer has an anhydride content of less than 15 weight percent, based on the total weight of said copolymer;
wherein the composition is prepared from a halogen-containing compound.

### Detailed Description

In an embodiment of the invention, a composition is disclosed comprises, consists of, or consists essentially of: a) an epoxy resin; and b) a hardener comprising a copolymer of: i) an ethylenically unsaturated anhydride, and ii) a vinyl compound, wherein the vinyl compound is styrene or a styrene derivative and wherein the copolymer has an anhydride content of less than 15 weight percent, based on the total weight of the copolymer;
wherein the composition is prepared from a halogen-containing compound.

Copolymers of an ethylenically unsaturated anhydride and a vinyl compound, include for example, styrene-maleic anhydride copolymer (SMA) and others, for example, as described in WO 95/06075, incorporated herein by reference.

In an embodiment, the copolymers of styrene and maleic anhydride can have a molecular weight (Mw) in the range of from 10,000 to 50,000 and an anhydride content of less than 15 weight percent. Commercial examples of these copolymer materials include but are not limited to SMA EF60 and SMA EF80 having styrene-maleic anhydride ratios of 6:1 and 8:1 respectively and weight average molecular weights ranging from 11,000 to 15,000; and are commercially available from The Sartomer Company.

The hardener composition may be dissolved in a solvent or a blend of solvents. Examples of suitable solvents include among others ketones, ethers, acetates, aromatic hydrocarbons, dimethylformamide, and cyclohexanone. In an embodiment, the solvent is 2-butanone.

The hardener composition of the present invention may contain ingredients in addition to the hardener components discussed above. For example, the hardener composition may contain other different crosslinking agents, i.e. co-crosslinkers, such as those selected from the other known hardeners for epoxy resins including amines, phenolics, anhydrides, carboxylic acids, mercaptans and isocyanates.

Any of the well known co-crosslinkers, as described in U.S. Patent Nos. 4,042,550 and 3,789,038, may be used in the present invention. As an illustration, known co-crosslinkers that may be used in the present invention, include for example, carboxylic acids such as oxalic acid, phthalic acid, terphthalic acid, maleic acid, fumaric acid, and succinic acid; and anhydrides such as phthalic anhydride, succinic anhydride, hexahydrophthalic anhydride, tetrahydrophthalic anhydride, nadic anhydride, itaconic anhydride, maleic anhydride, oxydiphthalic anhydride, and trimellitic anhydride.

The amount of co-crosslinker present in the hardener composition may be such that the SMA to co-crosslinker weight ratio is in the range of from about 99:1 to about 50:50. In an embodiment, the weight ratio is in the range of from about 95:5 to about 75:25.

The hardener composition of the present invention provides crosslinking between the hardener and the epoxy moieties of the epoxy resin to form a thermoset resin. The epoxy resins used in embodiments disclosed herein can vary and include conventional and commercially available epoxy resins, which can be used alone or in combinations of two or more, including, for example, novolac resins and isocyanate modified epoxy resins, among others. In choosing epoxy resins for compositions disclosed herein, consideration should not only be given to properties of the final product, but also to viscosity and other properties that may influence the processing of the resin composition.

The epoxy resin component can be any type of epoxy resin useful in molding compositions, including any material containing one or more reactive oxirane groups, referred to herein as "epoxy groups" or "epoxy functionality." Epoxy resins useful in embodiments disclosed herein can include mono-functional epoxy resins, multi- or poly-functional epoxy resins, and combinations thereof. Monomeric and polymeric epoxy resins can be aliphatic, cycloaliphatic, aromatic, or heterocyclic epoxy resins. The polymeric epoxies include linear polymers having terminal epoxy groups (a diglycidyl ether of a polyoxyalkylene glycol, for example), polymer skeletal oxirane units (polybutadiene polyepoxide, for example) and polymers having pendant epoxy groups (such as a glycidyl methacrylate polymer or copolymer, for example). The epoxies may be pure compounds, but are generally mixtures or compounds containing one, two or more epoxy groups per molecule. In an embodiment, the epoxy resin is prepared from a halogen-containing compound. Typically, the halogen is bromine. In some embodiments, epoxy resins can also include reactive -OH groups, which can react at higher temperatures with anhydrides, organic acids, amino resins, phenolic resins, or with epoxy groups (when catalyzed) to result in additional crosslinking. In an embodiment, the epoxy resin is produced by contacting a glycidyl ether with a bisphenol compound, such as, for example, bisphenol A or tetrabromobisphenol A to form epoxy-terminated oligomers. In another embodiment, the epoxy resins can be advanced by reaction with isocyanates to form oxazolidinones. Suitable oxazolidinones include toluene diisocyanate and methylene diisocyanate (MDI or methylene bis(phenylene isocyanate)). In another embodiment the brominated phenolic could be advanced into the epoxy prior to formulation with the hardener.

The composition of the present invention can also be modified by addition of other thermosets and thermoplastics. Examples of other thermosets include but are not limited to cyanates, triazines, maleimides, benzoxazines, allylated phenols, and acetylenic compounds. Examples of thermoplastics include poly(aryl ethers) such as polyphenylene oxide, poly(ether sulfones), poly(ether imides) and related materials.

In some embodiments, the epoxy resin can include glycidyl ether type; glycidyl-ester type; alicyclic type; heterocyclic type, and halogenated epoxy resins, etc. Nonlimiting examples of suitable epoxy resins can include cresol novoiac epoxy resin, phenolic novolac epoxy resin, biphenol and alkylated biphenol epoxy resins, naphthalene diol epoxy resin, hydroquinone epoxy resin, stilbene epoxy resin, and mixtures and combinations thereof.

Other useful epoxy resins can include resorcinol diglycidyl ether (1,3-bis-(2,3-epoxypropoxy)benzene), diglycidyl ether of bisphenol A (2,2-bis(p-(2,3-epoxypropoxy)phenyl)propane), triglycidyl p-aminophenol (4-(2,3-epoxypropoxy)-N,N-bis(2,3-epoxypropyl)aniline), diglycidyl ether of bromobisphenol A (2,2-bis(4-(2,3-epoxypropoxy)3-bromo-phenyl)propane), diglydicylether of bisphenol F (2,2-bis(p-(2,3-epoxypropoxy)phenyl)methane), triglycidyl ether of meta- and/or para-aminophenol (3-(2,3-epoxypropoxy)N,N-bis(2,3-epoxypropyl)aniline), and tetraglycidyl methylene dianiline (N,N,N',N'-tetra(2,3-epoxypropyl) 4,4'-diaminodiphenyl methane), and mixtures of two or more polyepoxy compounds. A more exhaustive list of useful epoxy resins found can be found in Lee, H. and Neville, K., Handbook of Epoxy Resins, McGraw-Hill Book Company, 1982 reissue.

Other suitable epoxy resins include polyepoxy compounds based on aromatic amines and epichlorohydrin, such as N,N'-diglycidyl-aniline; N,N'-dimethyl-N,N'-diglycidyl-4,4'-diaminodiphenyl methane; N,N,N',N'-tetraglycidyl-4,4'-diaminodiphenyl methane; N-diglycidyl-4-aminophenyl glycidyl ether; and N,N,N',N'-tetraglycidyl-1,3-propylene bis-4-aminobenzoate. Epoxy resins can also include glycidyl derivatives of one or more of: aromatic diamines, aromatic monoprimary amines, aminophenols, polyhydric phenols, polyhydric alcohols, polycarboxylic acids.

Other useful epoxy resins include, for example, polyglycidyl ethers of polyhydric polyols, such as ethylene glycol, triethylene glycol, 1,2-propylene glycol, 1,5-pentanediol, 1,2,6-hexanetriol, glycerol, and 2,2-bis(4-hydroxy cyclohexyl)propane; polyglycidyl ethers of aliphatic and aromatic polycarboxylic acids, such as, for example, oxalic acid, succinic acid, glutaric acid, terephthalic acid, 2,6-napthalene dicarboxylic acid, and dimerized linoleic acid; polyglycidyl ethers of polyphenols, such as, for example, bisphenol A, bisphenol F, 1,1-bis(4-hydroxyphenyl)ethane, 1,1-bis(4-hydroxyphenyl)isobutane, 1,1,2,2-tetra(4-hydroxyphenyl)ethane and 1,5-dihydroxy napthalene; modified epoxy resins with acrylate or urethane moieties; glycidylamine epoxy resins; and novolac resins.

The epoxy compounds can be cycloaliphatic or alicyclic epoxides. Examples of cycloaliphatic epoxides include diepoxides of cycloaliphatic esters of dicarboxylic acids such as bis(3,4-epoxycyclohexylmethyl)oxalate, bis(3,4-epoxycyclohexylmethyl)adipate, bis(3,4-epoxy-6-methylcyclohexylmethyl)adipate, bis(3,4-epoxycyclohexylmethyl)pimelate; vinylcyclohexene diepoxide; limonene diepoxide; dicyclopentadiene diepoxide; and the like. Other suitable diepoxides of cycloaliphatic esters of dicarboxylic acids are described, for example, in U.S. Patent No. 2,750,395.

Other cycloaliphatic epoxides include 3,4-epoxycyclohexylmethyl-3,4-epoxycyclohexane carboxylates such as 3,4-epoxycyclohexylmethyl-3,4-epoxycyclohexane carboxylate; 3,4-epoxy-1-methylcyclohexyl-methyl-3,4-epoxy-1-methylcyclohexane carboxylate; 6-methyl-3,4-epoxycyclohexylmethylmethyl-6-methyl-3,4-epoxycyclohexane carboxylate; 3,4-epoxy-2-methylcyclohexylmethyl-3,4-epoxy-2-methylcyclohexane carboxylate; 3,4-epoxy-3-methylcyclohexyl-methyl-3,4-epoxy-3-methylcyclohexane carboxylate; 3,4-epoxy-5-methylcyclohexyl-methyl-3,4-epoxy-5-methylcyclohexane carboxylate and the like. Other suitable 3,4-epoxycyclohexylmethyl-3,4-epoxycyclohexane carboxylates are described, for example, in U.S. Patent No. 2,890,194.

Further epoxy-containing materials which are useful include those based on glycidyl ether monomers. Examples are di- or polyglycidyl ethers of polyhydric phenols obtained by reacting a polyhydric phenol, such as a bisphenol compound with an excess of chlorohydrin such as epichlorohydrin. Such polyhydric phenols include resorcinol, bis(4-hydroxyphenyl)methane (known as bisphenol F), 2,2-bis(4-hydroxyphenyl)propane (known as bisphenol A), 2,2-bis(4'-hydroxy-3',5'-dibromophenyl)propane, 1,1,2,2-tetrakis(4'-hydroxy-phenyl)ethane or condensates of phenols with formaldehyde that are obtained under acid conditions such as phenol novolacs and cresol novolacs. Examples of this type of epoxy resin are described in U.S. Patent No. 3,018,262. Other examples include di- or polyglycidyl ethers of polyhydric alcohols such as 1,4-butanediol, or polyalkylene glycols such as polypropylene glycol and di- or polyglycidyl ethers of cycloaliphatic polyols such as 2,2-bis(4-hydroxycyclonexyl)propane. Other examples are monofunctional resins such as cresyl glycidyl ether or butyl glycidyl ether.

Another class of epoxy compounds are polyglycidyl esters and poly(beta-methylglycidyl) esters of polyvalent carboxylic acids such as phthalic acid, terephthalic acid, tetrahydrophthalic acid or hexahydrophthalic acid. A further class of epoxy compounds are N-glycidyl derivatives of amines, amides and heterocyclic nitrogen bases such as N,N-diglycidyl aniline, N,N-diglycidyl toluidine, N,N,N',N'-tetraglycidyl bis(4-aminophenyl)methane, triglycidyl isocyanurate, N,N'-diglycidyl ethyl urea, N,N'-diglycidyl-5,5-dimethylhydantoin, and N,N'-diglycidyl-5-isopropylhydantoin.

Still other epoxy-containing materials are copolymers of acrylic acid esters of glycidol such as glycidylacrylate and glycidylmethacrylate with one or more copolymerizable vinyl compounds. Examples of such copolymers are 1:1 styrene-glycidylmethacrylate, 1:1 methylmethacrylate-glycidylacrylate and a 62.5:24:13.5 methylmethacrylate-ethyl acrylate-glycidylmethacrylate.

Epoxy compounds that are readily available include octadecylene oxide; glycidylmethacrylate; diglycidyl ether of bisphenol A; D.E.R.™ 331 (bisphenol A liquid epoxy resin) and D.E.R.™ 332 (diglycidyl ether of bisphenol A) available from The Dow Chemical Company, Midland, Michigan; vinylcyclohexene dioxide; 3,4-epoxycyclohexylmethyl-3,4-epoxycyclohexane carboxylate; 3,4-epoxy-6-methylcyclohexyl-methyl-3,4-epoxy-6-methylcyclohexane carboxylate; bis(3,4-epoxy-6-methylcyclohexylmethyl) adipate; bis(2,3-epoxycyclopentyl) ether; aliphatic epoxy modified with polypropylene glycol; dipentene dioxide; epoxidized polybutadiene; silicone resin containing epoxy functionality; flame retardant epoxy resins (such as a brominated bisphenol type epoxy resin available under the trade names D.E.R.™ 530, 538, 539, 560, 592, and 593, available from The Dow Chemical Company, Midland, Michigan); polyglycidyl ether of phenolformaldehyde novolac (such as those available under the tradenames D.E.N.™ 431 and D.E.N.™ 438 available from The Dow Chemical Company, Midland, Michigan); and resorcinol diglycidyl ether. Although not specifically mentioned, other epoxy resins under the tradename designations D.E.R.^{™} and D.E.N.^{™} available from The Dow Chemical Company can also be used.

In an embodiment, the epoxy resin can be produced by contacting a glycidyl ether with a bisphenol compound and a polyisocyanate, such as toluene diisocyanate or 'methylene diisocyanate' (the diisocyanate of methylene dianiline), to form oxazolidinone moieties. These resins can be prepared using methods outlined in U.S. Patent No. 5,112,932, which is incorporated herein by reference.

Other suitable epoxy resins are disclosed in, for example, U.S. Patent Nos. 7,163,973, 6,632,893, 6,242,083, 7,037,958, 6,572,971, 6,153,719, and 5,405,688 and U.S. Patent Application Publication Nos. 20060293172 and 20050171237..

Small amounts of other thermosetting resins that are not epoxides may be added to the formulation, such as phenolic resins, benzoxazine resins, aryl cyanate resins, aryl triazine resins, and a maleimide resins.

Mixtures of any of the above-listed resins may, of course, also be used.

Any of the well known catalysts described in U.S. Patent No. 4,925,901" may be used in the present invention. As an illustration, examples of the known catalysts that may be used in the present invention, include for example, suitable onium or amine compounds such as ethyltriphenyl phosphonium acetate, ethyltriphenyl phosphonium acetate-acetic acid complex, triphenylphosphine, triethylamine, methyl diethanolamine, benzyldimethylamine, and imidazole compounds such as 2-methylimidazole, 2-phenylimidazole, and benzimidazole. In an embodiment, 2-ethyl-4-methyl imidazole (2E4MI) is used.

The catalysts, when present, are employed in a sufficient amount to result in a substantially complete cure of the epoxy resin, with some cross-linking. For example, the catalyst may be used in an amount of from about 0.01 to about 5 parts per hundred parts of resin, with from about 0.01 to about 1.0 parts per hundred parts of resin being preferred and from about 0.02 to about 0.5 catalyst per hundred parts of resin being more preferred.

Another optional component that can be added to the epoxy resin composition is a toughener. Any suitable toughener can be used. Examples of suitable tougheners include, but are not limited to Dow PC-GRC, Dow GRC-310, Latex DL-995, Latex DL-6010, Kaneka Kane Ace ^{®} MX-210, and core-shell rubbers from Kumho. In this embodiment, the toughener can be present in the epoxy resin composition in the range of from about 2 weight percent to about 10 weight percent, based on the total weight of the epoxy resin composition.

Another optional component useful in the epoxy resin composition of the present invention is a reaction inhibitor. The reaction inhibitor may include boric acid, Lewis acids containing boron such as alkyl borate, alkyl borane, trimethoxyboroxine, an acid having a weak nucleophilic anion, such as, perchloric acid, tetrafluoroboric acid, and organic acids having a pKa from 1 to 3, such as, salicylic acid, oxalic acid and maleic acid. Boric acid as used herein refers to boric acid or derivatives thereof, including metaboric acid and boric anhydride; and combinations of a Lewis acid with boron salts such as alkyl borate or trimethoxyboroxine. When an inhibitor is used in the present invention, boric acid is preferably used. The inhibitor and catalyst may be separately added, in any order, to the epoxy resin composition of the present invention, or may be added as a complex. Descriptions of the use of boric acid are described in US 5,169,473, US 5,308,895, US 5,314,720, and US 5,721,323 and are included herein by example.

The amount of the inhibitor present relative to the catalyst in the epoxy resin composition of the present invention can be adjusted to adjust the gel time of the epoxy resin composition. At constant levels of catalyst, an increasing amount of inhibitor will yield a corresponding increase in the gel time. At a desired catalyst level the relative amount of inhibitor can be decreased to decrease the gel time. To increase the gel time the amount of inhibitor can be increased without changing the catalyst level.

The molar ratio of inhibitor (or mixture of different inhibitors) to catalyst is that ratio which is sufficient to significantly inhibit the reaction of the polyepoxide as exhibited by an increase in gel time as compared to a like composition free of inhibitor. Simple experimentation can determine the particular levels of inhibitor or mixtures which will increase in gel time but still allow a complete cure at elevated temperatures. For example, a preferable molar ratio range of inhibitor to catalyst where up to about 5.0 phr of boric acid is used, is from about 0.1:1.0 to about 10.0:1.0, with a more preferred range being from about 0.4:1.0 to about 7.0:1.0.

Another optional component which may be added to the epoxy resin composition of the present invention is a solvent or a blend of solvents. The solvent used in the epoxy resin composition is preferably miscible. In addition, an epoxy/hardener varnish containing the hardener composition of the present invention is a clear solution or a stable dispersion depending on the optional solvents used in the composition. Examples of suitable solvents employed in the present invention include for example, ketones, alcohols, ethers, ether alcohols, acetates, aromatic hydrocarbons, cyclohexanone, dimethylformamide, Dowanol^{™}PMA and combinations thereof.

Preferred solvents for the catalyst and the inhibitor are polar solvents. Polar solvents are particularly useful to dissolve inhibitors of boric acid or Lewis acids derived from boron. If the polar solvents are hydroxy containing, there exists a potential competition for available carboxylic acid anhydride between the hydroxy moiety of the solvent and the secondary hydroxyl formed on opening of the oxirane ring. Thus, polar solvents which do not contain hydroxyl moieties are useful, for example, N,-methyl-2-pyrrolidone, dimethylsulfoxide, dimethylformamide, and tetrahydrofuran. Also useful are dihydroxy and trihydroxy hydrocarbons optionally containing ether moieties or glycol ethers having two or three hydroxyl groups. Particular useful are C₂₋₄ di- or trihydroxy compounds, for example 1,2-propane diol, ethylene glycol and glycerine. The polyhydroxy functionality of the solvent facilitates the solvent serving as a chain extender, or as a co-cross-linker according to the possible mechanism previously described concerning co-cross-linkers.

The total amount of solvent used in the epoxy resin composition generally may be between about 20 and about 60 weight percent, preferably between about 30 and about 50 weight percent, and most preferably between about 35 and about 45 weight percent.

The curable epoxy resin composition according to the present invention may contain usual additives such as fillers, dyes, pigments, thixotropic agents, surfactants, fluidity control agents, stabilizers, diluents that aid processing, adhesion promoters, flexibilizers, toughening agents and fire retardants.

The curable epoxy resin composition of the present invention can be produced by mixing all the components of the composition together in any order. Alternatively, the curable epoxy resin composition of the present invention can be produced by preparing a first composition comprising the epoxy resin component and a second composition comprising the hardener composition component. All other components useful in making the epoxy resin composition may be present in the same composition, or some may be present in the first composition, and some in the second composition. The first composition is then mixed with the second composition to form the curable epoxy resin composition. The epoxy resin composition mixture is then cured to produce an epoxy resin thermoset material. Preferably, the curable epoxy resin composition is in the form of a solution wherein the components of the composition are dissolved in a solvent. Such solution or varnish is used for producing a coated article.

The curable epoxy resin composition of the present invention may be used to coat any article for which a coating is desired. The article may be coated with the composition of the present invention using any method known to those skilled in the art, including for example powder-coating, spray-coating, and contacting the article with a bath containing the composition. Such article can be coated, with the epoxy resin composition, and the coating can be partially cured or fully cured. In the embodiment where the coating is partially cured, the article may be further processed such that the partially cured resin may be finally cured. The article coated can be any substrate, for example metal, cement and reinforcing material. In one embodiment, the article is a fibrous reinforcing material for composites, prepregs or laminates.

Varnishes made from epoxy resin compositions according to the present invention can be employed to make composites for, inter alia, the electronics, construction, aviation, alternative energy (i.e., windmill blades), and automobile industries. Items that can be made include but are not limited to, electrical laminates, castings, printed circuit boards, and windmill blades. The curable epoxy resin composition of the present invention may be used to make composite materials by techniques well known in the industry such as by impregnating a reinforcing material with molten or dissolved resin, or via resin transfer molding, filament winding, pultrusion or RIM (reaction injection molding) and other moulding, encapsulation, or coating techniques. Also, the curable epoxy resin compositions according to the present invention can be employed wherever use is made of conventional epoxy resins, such as a glue, coating, molding resin, embedding resin, encapsulating resin, sheet molding compound, or bulk molding compound.

Varnishes made with the epoxy resin compositions of the present invention are particularly useful for making B-staged prepregs and laminates, for example for printed wiring boards, by well known techniques in the industry. The present invention is preferably directed to laminates for use in the electronics industry incorporating the epoxy resin composition of the present invention. It was found that even when the resin composition is based on simple difunctional epoxy compounds, the combination of resin components according to the present invention will give excellent properties for application in the electronics industry.

Generally, laminates for use in the electronics industry, particularly for printed wiring boards, are produced by impregnating a supporting or reinforcing material with the epoxy resin composition of the present invention, followed by the resin being cured wholly or in part. A reinforcing material impregnated with a partially cured resin is usually referred to herein as the "prepreg". To make a printed wiring board from prepregs, one or more layers of prepregs are laminated with, for example, one or more layers of a metallic material such as copper.

The reinforcing material which may be impregnated with the epoxy resin composition of the present invention include any material which would be used by the skilled artisan in formation of composites, prepregs and laminates. Examples of the forms of such reinforcing materials are woven fabric, cloth, mesh, web, or fibers; or in the form of a cross-ply laminate of unidirectionally oriented parallel filaments. Generally, such reinforcing materials are made from a variety of materials such as glass fibers, paper, plastics such as aromatic polyamides, graphite, glass, quartz, carbon, boron fibers, and organic fibers such as for instance aramid, teflon, , more particularly to make laminates for printed wiring boards. In one preferred embodiment, the reinforcing materials include glass or fiberglass, in cloth or web form. As an illustration of the present application, the epoxy resin composition according to the present invention are highly suitable for impregnating, for example, woven glass fabric.

In one embodiment of the present invention, the reinforcing material is contacted with the epoxy resin composition of the present invention with a varnish which is contained in a bath. Preferably the varnish contains from about 40 to about 90 percent solids. In such a varnish, the various components of the epoxy resin composition are dissolved or suspended in a solvent. A single solvent or solvent blend may be used for the varnish, but in many applications a separate solvent is used for each component added to the mixture. It is preferable that the various solvents used be miscible with one another. Such solvents or diluents, include those which are volatile and escape from the composition prior to cure. Preferred solvents for the epoxy resins are ketones, including acetone and methyl ethyl ketone. Preferred solvents for the hardener composition are slightly polar solvents, amides, for example, dimethylformamide, ether alcohols, for example, methyl, ethyl, propyl or butyl ethers of ethylene glycol, ketones of methyl, ethyl, propyl or butyl, cyclohexanone, dipropylene glycol, ethylene glycol monomethylether, 1 methoxy-2-propanol, toluene, xylene methoxypropyl acetate, 2-ethoxyethyl acetate, Dowanol^{®} PMA, and mixtures of solvents. The catalysts and inhibitors, for example, are preferably dissolved in polar solvents, in particular alcohols, preferably lower alkanols and most preferably methanol. Where the inhibitor is liquid or has high solubility in non-polar solvents, ketones may be used.

In one embodiment of the present invention, prepregs are prepared from the epoxy resin composition of the present invention and the reinforcing material by a process comprising first contacting the reinforcing material with an intimately mixed varnish of the epoxy resin composition comprising: a polyepoxide in a solvent; a hardener composition of the present invention for the polyepoxide in a solvent; optionally, an inhibitor such as boric acid in a polar solvent; optionally, a compound which catalyzes the curing of the polyepoxide with the hardener in a polar solvent; optionally, fillers such as talc, silica, aluminum oxide; optionally, additional flame retardants such as aluminum trihydroxide, aluminum salts of phosphorus acids and alkyl esters; optionally toughening agents such as grafted rubbers, core-shell rubbers, and copolymers; optionally additives intended to improve a particular property such as flow-aids, anti-foam agents, wetting agents, and the like. The reinforcing material is impregnated with the epoxy resin composition in the bath. Thereafter, the resin impregnated reinforcing material is passed through a heated zone at a temperature sufficient to cause the solvents in the composition to evaporate, but below the temperature at which the polyepoxide undergoes complete cure during the residence time in the heated zone.

The residence time of the resin impregnated reinforcing material in the heated zone is from about 0.5 to about 15 minutes, more preferably from about 1 to about 10 minutes, and most preferably from about 1.5 to about 5 minutes. The temperature of the heated zone is sufficient to cause any solvents remaining in the epoxy resin composition to volatilize away, yet, not so high as to result in a complete curing of the components of the epoxy resin composition. Preferable temperatures of such heated zone are from about 80 °C to about 230 °C, more preferably from about 100 °C to about 200 °C, and most preferably from about 150 °C to about 190 °C. Preferably, there is some means in the heated zone to remove the volatile solvent, either by passing air through the heated zone (which can be an oven) or drawing a slight vacuum on the oven. In other embodiments, the impregnated reinforcement materials may be exposed to zones of increasing temperature. For example, a first zone may be designed to cause the solvent to volatilize so the solvent can be removed, with subsequent zones designed to result in partial cure of the polyepoxide, that is, so called B-staging to form the prepreg.

In one embodiment of the present invention, laminates are manufactured from the prepreg material prepared above by contacting several layers, segments or parts of the prepreg material with one another. Thereafter, the contacted layers, segments or parts are exposed to elevated pressures and temperatures sufficient to cause the epoxy resin component in the resin composition to fully cure such that the resin on adjacent layers, segments or parts react to form a continuous epoxy resin matrix between and about the fibrous reinforcing material to form a laminate. Before being cured, the parts of prepreg material may be cut and stacked, or folded and stacked, into a part of desired shape and thickness.

The pressures used to press the prepregs, in a press means to prepare a laminate may be anywhere from about 10 to about 2000 newtons/cm², with from about 100 to about 1000 newtons/cm² being preferred. The temperature used to cure the prepreg material to form the laminates, depends upon the particular residence time, pressure used, and make up of the epoxy resin composition used. Generally, cure temperatures which may be used may be anywhere from about 100 °C to about 240 °C, preferably from about 120 °C to about 210 °C, and more preferably from about 170 °C to about 200 °C. The residence time of the prepreg material in the press may be anywhere from about 30 minutes to about 300 minutes, preferably from about 45 to about 200 minutes, and more preferably from about 60 minutes to about 120 minutes.

One embodiment of a process for making a laminate may be a continuous process. In such a continuous process, the reinforcing material is taken from the oven and appropriately arranged into the desired shape and thickness and pressed at very high temperatures for short times, in particular such high temperatures are from about 180 °C to about 250 °C, more preferably about 190 °C to about 210 °C, at times of about 1 minute to about 10 minutes.

In an alternative embodiment of the present invention, it may be desirable to subject the laminate or final product to a post-cure step outside of the press. This post-cure step is designed to complete the curing reaction. The post-cure step is usually performed at from about 130 °C to about 220 °C for from about 20 minutes to about 200 minutes. This post-cure step may be performed in a vacuum to remove any components which may volatilize.

The ultimate fully cured laminate prepared from the curable epoxy resin composition of the present invention, often demonstrates a higher Tg than laminates prepared from compositions not within the scope of the present invention. Generally, the Tg of the laminate is from about 150 °C to about 220 °C, and preferably from about 150 °C to about 180 °C. Usually the Tg is higher for the laminate of the present invention than standard FR4 laminates. It is known that the Tg of a laminate can decrease when a toughening agent is used.

A laminate prepared using the epoxy resin composition of the present invention, also maintains its excellent thermal properties such as for example a high thermal resistance. For example, the Td is generally from about 300 °C to about 400 °C, preferably from about 320 °C to about 380 °C and more preferably greater than about 350 °C.

The dielectric properties of a laminate, especially the dielectric constant (Dk), are also improved when using the hardener composition of the present invention. When compared to standard FR4, the laminate of the present invention is always better. The Dk is significantly less than about 4.0. In an embodiment, the Dk is less than about 3.8 and in another embodiment, the Dk is less than about 3.6. These ranges in Dk are given in the context of a particular laminate construction, resin content, and frequency range. The dissipation factor, Df, is generally less than about 0.015, preferably less then about 0.010 and more preferably less than about 0.007 at 1 GHz test frequency.

In addition, a partly cured B-staged prepreg made from the epoxy/hardener composition of the present invention has improved cosmetics and generates less dust during handling. Generally, the prepreg dust is less than about 0.15 g/m, preferably less than about 0.10 g/m and more preferably less than about 0.08 g/m.

Furthermore, a fully cured C-staged laminate made from the epoxy/hardener composition of the present invention shows improved toughness and lower tendency to delamination. Generally, the present invention laminate shows at least a 10% improvement over laminates made from standard resins and up to ten times improvement. For example, the delamination values of laminates of the present invention may be about 1.0 J and above; and up to about 3.0 J.

### Examples

Various terms and designations for the materials used in the following Examples are explained as follows:
Dowanol™ PMA is a propylene glycol monomethyl ether acetate sold by The Dow Chemical Company.
SMA stands for styrene maleic anhydride copolymer.
EF-60 stands for Sartomer EF-60 SMA copolymer.
EF-80 stands for Sartomer EF-80 SMA copolymer.
D.E.N.™ 438 is a multifunctional epoxy novolac with an epoxy equivalent weight of 180 sold by The Dow Chemical Company.
D.E.R.™ 560 is a brominated epoxy resin with an epoxy equivalent weight of 450 sold by The Dow Chemical Company.
XZ-97103 is an oxazolidone modified experimental epoxy resin with an epoxy equivalent weight of 290 sold by the Dow Chemical Company.
2E4MI stands for 2-ethyl-4-methyl imidazole solution (20% non volatiles).
TBBA stands for tetrabromobisphenol A.

Various experimental testing and analytical methods used for various measurements in the following Examples are as follows:
DSC stands for differential scanning colorimetry.

Tg stands for glass transition temperature, the temperature at which an amorphous solid goes from a hard, glass-like state to a rubber-like state. Tg is measured by the mid-point Tg by DSC at a heating rate of 10 °C/minute for films and at a heating rate of 20 °C/minute for laminates. The method used was IPC-TM-650-#2.4.25C.

T-288 stands for time to delamination at 300 °C measured by thermo-mechanical analysis (TMA). The method used was IPC-TM-650-#2.4.24:1.

CTE stands for coefficient of thermal expansion measured by TMA.

Td stands for temperature of thermal degradation measured by thermo gravimetrical analysis (TGA). Td is the temperature at 5 wt% loss.

Copper peel strength was measured using the method described in IPC-TM-650-#2.4.8C.

### Example 1

### Sample formulation with an SMA hardener having a 6:1 ratio of styrene to maleic anhydride

A laminate varnish was prepared from 71.42 grams of D.E.R.^{™} 560, 38.45 grams of a 75 wt% solution of D.E.N.^{™} 438 in 2-butanone, 144.4 grams of SMA (EF-60, from Sartomer**), 22.05 grams of TBBA and 2 grams of a 10 wt% solution of 2-phenyl imidazole containing 9 parts Dowanol™-PMA and 1 part ethanol. This composition has 18.3 wt% bromine and 46 wt % styrene.

### Example 2

### Sample formulation with an SMA hardener having a 6:1 ratio of styrene to maleic anhydride

A laminate varnish was prepared from 50.01 grams of D.E.R.^{™} 560, 66.67 grams of a 75 wt% solution of D.E.N.^{™} 438 in 2-butanone, 127.21 grams of SMA (EF-60, from Sartomer**), 42.33 grams of TBBA, 0.5 grams of a 10 wt% solution of 2-ethyl-4methyl imidazole containing 2-butanone, and 0.10 grams of TPP-k. This composition has 18.5 wt% bromine and 41 wt % styrene.

### Example 3

### Sample formulation with all SMA hardener having a 6:1 ratio of styrene to maleic anhydride

A laminate varnish was prepared from 50.01 grams of D.E.R.^{™} 560, 66.67 grams of a 75 wt% solution of D.E.N.^{™} 438 in 2-butanone, 127.21 grams of SMA (EF-60, from Sartomer**), 42.33 grams of TBBA, and 0.5 grams of a 10 wt% solution of 2-ethyl-4methyl imidazole containing 2-butanone. This composition has 18.5 wt% bromine and 41 wt % styrene.

### Example 4

### Sample formulation with an SMA hardener having a 6:1 ratio of styrene to maleic anhydride,

A laminate varnish was prepared from 75.00 grams of D.E.R.^{™} 560, 60.36 grams of a 77 wt% solution of Dow Experimental Product XZ-97103, 123.00 grams of SMA (EF-60, from Sartomer**), 43.20 grams of TBBA, and 1.2 grams of a 10 wt% solution of 2-ethyl-4methyl imidazole containing 2-butanone. This composition has 21.9 wt% bromine and 37 wt % styrene.

### Example 5

### Sample formulation with an SMA (8:1 ratio of styrene to maleic anhydride)

A laminate varnish was prepared from 56.83 grams of D.E.R.^{™} 560, 55.54 grams of an 85 wt% solution of D.E.N.^{™} 438 in 2-butanone, 248.76 grams of SMA (EF-80, from Sartomer**), 45.00 grams of TBBA, 3.12 grams of a 20 wt% solution of boric acid in methanol, and 33.92 grams of a 1 wt% solution of 2-ethyl-4-methyl imidazole in 2-butanone. This composition has 18.3 wt% bromine and 45 wt % styrene.

### Example 6

### Sample formulation with all SMA (8:1 ratio of styrene to maleic anhydride)

A laminate varnish was prepared from 56.20 grams of D.E.R.^{™} 560, 20.94 grams of an 85 wt% solution of D.E.N.^{™} 438 in 2-butanone, 11.87 grams of D.E.R.^{™} 330, 148.58 grams of SMA (EF-80, from Sartomer**), 38.14 grams of TBBA, and 1.01 grams of a 1 wt% solution of 2-methyl imidazole in 2-butanone. This composition has 18.3 wt% bromine and 45 wt % styrene.

### Example 7

### Sample formulation with an SMA (8:1 ratio of styrene to maleic anhydride)

A laminate varnish was prepared from 47.36 grams of D.E.R.^{™} 560, 47.06 grams of an 85 wt% solution of D.E.N.^{™} 438 in 2-butanone, 210.08 grams of SMA (EF-80, from Sartomer**), 37.50 grams of TBBA, and 1.42 grams of a 1 wt% solution of 2-methyl imidazole in 2-butanone. This composition has 18.3 wt% bromine and 45 wt % styrene.

### Example 8

### Sample formulation with an SMA (8:1 ratio of styrene to maleic anhydride)

A laminate varnish was prepared from 143.77 grams of D.E.R.^{™} 560, 37.33 grams of D.E.R.^{™} 330, 201.68 grams of SMA (EF-80, from Sartomer**), and 1.37 grams of a 1 wt% solution of 2-methyl imidazole in 2-butanone. This composition has 18.0 wt% bromine and 45 wt % styrene.

### Example 9

### Sample formulation with all SMA (8:1 ratio of styrene to maleic anhydride)

A laminate varnish was prepared from 14.20 grams of D.E.R.^{™} 560, 24.00 grams of an 85 wt% solution of D.E.N.^{™} 438 in 2-butanone, 11.25 grams of TBBA, and 0.85 grams of a 5 wt% solution of 2-ethyl-4-methyl imidazole in 2-butanone. This composition has 18.3 wt% bromine and 45 wt % styrene.

### Example 10

### Sample formulation with an SMA (8:1 ratio of styrene to maleic anhydride)

A laminate varnish was prepared from 14.21 grams of D.E.R.^{™} 560, 24.00 grams of an 85 wt% solution of D.E.N.^{™} 438 in 2-butanone, 62.87 grams of SMA (EF-80, from Sartomer**), 10.88 grams of TBBA, and 0.85 grams of a 5 wt% solution of 2-ethyl-4-methyl imidazole in 2-butanone. This composition has 18.0 wt% bromine and 45 wt % styrene.

### Example 11

### Sample formulation with an SMA (8:1 ratio of styrene to maleic anhydride)

A laminate varnish was prepared from 14.21 grams of D.E.R.^{™} 560, 24.00 grams of an 85 wt% solution of D.E.N.^{™} 438 in 2-butanone, 63.50 grams of SMA (EF-80, from Sartomer**), 10.50 grams of TBBA, and 0.85 grams of a 5 wt% solution of 2-ethyl-4-methyl imidazole in 2-butanone. This composition has 17.7 wt% bromine and 45 wt % styrene.

### Example 12

### Sample formulation with an SMA (8:1 ratio of styrene to maleic anhydride)

A laminate varnish was prepared from 13.13 grams of D.E.R.^{™} 560, 24.00 grams of an 85 wt% solution of D.E.N.^{™} 438 in 2-butanone, 62.25 grams of SMA (EF-80, from Sartomer**), 12.33 grams of TBBA, and 0.85 grams of a 5 wt% solution of 2-ethyl-4-methyl imidazole in 2-butanone. This composition has 18.5 wt% bromine and 45 wt % styrene.

### Example 13

### Sample formulation with an SMA (8:1 ratio of styrene to maleic anhydride)

A laminate varnish was prepared from 11.21 grams of D.E.R.^{™} 560, 24.00 grams of an 85 wt% solution of D.E.N.^{™} 438 in 2-butanone, 62.25 grams of SMA (EF-80, from Sartomer**), 14.25 grams of TBBA, and 0.85 grams of a 5 wt% solution of 2-ethyl-4-methyl imidazole in 2-butanone. This composition has 18.7 wt% bromine and 45 wt % styrene.

### Example 14

### Preparation of varnish from formulations based on SMA EF60

A laminate varnish was prepared from 1013.37 grams of D.E.R.^{™} 560 at 70 wt% in Dowanol^{™}-PMA, 834.54 grams of an 85 wt% solution of D.E.N.^{™} 438 in 2-butanone, 3012.60 grams of a 60 wt% solution of SMA (EF-60, from Sartomer**) in 2-butanone, 857.75 grams of a 70 wt% solution of TBBA in 2-butanone, and 28.34 grams of a 10 wt% solution of 2-ethyl-4-methyl imidazole in 2-butanone. An additional 500 grams of 2-butanone was added to bring the wt% solids to 61 wt%. This composition has 18.5 wt% bromine and 41 wt % styrene on a solids basis.

### Example 15

### Preparation of varnish from formulations based on SMA EF80

A laminate varnish was prepared from 1082.46 grams of D.E.R.^{™} 560 at 70 wt% in Dowanol^{™}-PMA, 740.52 grams of an 85 wt% solution of D.E.N.^{™} 438 in 2-butanone, 3563.64 grams of a 55 wt% solution of SMA (EF-80, from Sartomer**) in 2-butanone, 914.29 grams of a 70 wt% solution of TBBA in 2-butanone, 41.61 grams of 20 wt% boric acid in methanol, and 28.34 grams of a 10 wt% solution of 2-ethyl-4-methyl imidazole in 2-butanone. An additional 400 grams of 2-butanol was added to bring the wt% solids to 60 wt%. This composition has 18.9 wt% bromine and 44 wt % styrene on a solids basis.

### Example 16

### Preparation of varnish from formulations based on SMA EF80 and SMA EF60

A laminate varnish was prepared from 1924.0 grams of D.E.R.^{™} 560 at 70 wt% in Dowanol^{™}-PMA, 1568.8 grams of D.E.N.™ 438 in 2-butanone at 85 wt%, 4900.0 grams of SMA (90:10 EF-80: EF-60, from Sartomer**) in 2-butanone at 65 wt%, 1574.8 grams of TBBA in 2-butanone at 70 wt%, 21.0 grams of boric acid in methanol at 20 wt%, and 11.40 grams of 2-ethyl-4-methyl imidazole in 2-butanone at 10 wt%. This composition has 18.9 wt% bromine and 44 wt % styrene on a solids basis.

**Table 1. Laminate and clear casting properties from Examples 14 and 15. All properties are on laminates except for Dk and Df where measurements are on a clear casting of the varnish. The laminate was made with 7628 glass.**

| Test | Conditions | Example 14 Test Result | Example 15 Test Result | Units | IPC-TM-650 |
|---|---|---|---|---|---|
| Glass transition, Tg | DSC | 162 | 168 | °C | 2.4.25 |
| Decomposition, Td, | TGA | 366 | 362 | °C | ASTM |
| 5 % loss | | | | | D3850 |
| T-288 | TMA | 32 | 25 | min | 2.4.25 |
| CTE-Z: α-1 | Pre-Tg | 53.6 | 48 | ppm/°C | 2.4.24 |
| CTE-Z: α-2 | Post-Tg | 265 | 310 | ppm/°C | 2.4.24 |
| Dk (clear casting) | 1 MHz | 3.27 | 3.05 | ----- | 2.5.5.9 |
| | 1 GHz | 3.04 | 2.87 | ----- | 2.5.5.9 |
| | 2 GHz | 3.10 | 2.95 | ----- | 2.5.5.3 |
| | 5 GHz | 3.08 | 2.96 | ----- | 2.5.5.9 |
| | 10 GHz | 3.04 | 2.92 | ----- | 2.5.5.5 |
| Df (clear casting) | 1 MHz | 0.008 | 0.007 | ----- | 2.5.5.9 |
| Df (clear casting) | 1 GHz | 0.005 | 0.005 | ----- | 2.5.5.9 |
| Copper Peel Strength | Std. copper | 4.3 | 5.0 | Lbs/in | 2.4.8.2 |
| Moisture Absorption | ----- | 0.12 | 0.13 | Wt % | 2.6.2.1 |
| Solder Dip (550 F) | unetched | 100 | 100 | % | 2.6.8.1 |
| Flammability | ----- | V-0 | V-0 | V-0 | UL94 |

| | | | | | |
|---|---|---|---|---|---|
| ** Sartomer Company Inc., *502 Thomas Jones Way, Exton, PA 19341* | | | | | |

## Claims

1. A composition comprising:
a) an epoxy resin; and
b) a hardener comprising a copolymer of: i) an ethylenically unsaturated anhydride, and ii) a vinyl compound, wherein said vinyl compound is styrene or a styrene derivative and wherein said copolymer has an anhydride content of less than 15 weight percent, based on the total weight of said copolymer;
wherein said composition is prepared from a halogen-containing compound, and wherein said copolymer is present in an amount in the range of from 10 weight percent to 90 weight percent, based on the total weight of said composition;
wherein a fully cured laminate prepared from said composition has a glass transition temperature, Tg, in the range from 150°C to 220°C and a dissipation factor D_{f} of less than 0.015 at 1 GHz test frequency.

2. A composition in accordance with claim 1 further comprising a solvent in an amount in the range of from 30 to 60 weight percent, based on the total weight of said composition.

3. A composition in accordance with claim 1 wherein said halogen-containing compound is selected from the group consisting of tetrabromobisphenol-A (TBBA) and tetrabromobisphenol F.

4. A composition in accordance with claim 1 wherein said epoxy resin is produced by contacting a glycidyl ether with a bisphenol compound to form oxazolidinone moieties.

5. A composition in accordance with claim 4 wherein said epoxy resin is produced by contacting a glycidyl ether with a bisphenol compound and a polyisocyanate.

6. A composition in accordance with claim 1 wherein said epoxy resin is selected from the group consisting of a phenolic epoxy resin, a novolac epoxy resin, a benzoxazine resin, an aryl cyanate resin, an aryl triazine resin, a maleimide resin, and combinations of any two or more thereof.

7. A varnish produced from the composition of claim 1.

8. A prepreg prepared from the varnish of claim 7.

9. An electrical laminate prepared from the varnish of claim 7

10. A printed circuit board prepared from the varnish of claim 7.

11. A coating prepared from the varnish of claim 7.

12. A composite prepared from the varnish of claim 7.

13. A casting prepared from the varnish of claim 7.

14. An adhesive prepared from the varnish of claim 7.

## Patentansprüche

1. Eine Zusammensetzung, beinhaltend:
a) ein Epoxidharz; und
b) einen Härter, beinhaltend ein Copolymer aus: i) einem ethylenisch ungesättigten Anhydrid und ii) einer Vinylverbindung, wobei die Vinylverbindung Styrol oder ein Styrolderivat ist, und wobei das Copolymer einen Anhydridgehalt von weniger als 15 Gewichtsprozent, bezogen auf das Gesamtgewicht des Copolymers, aufweist;
wobei die Zusammensetzung aus einer halogenhaltigen Verbindung hergestellt wird, und
wobei das Copolymer in einer Menge im Bereich von 10 Gewichtsprozent bis 90 Gewichtsprozent, bezogen auf das Gesamtgewicht der Zusammensetzung, vorliegt; wobei ein vollständig gehärtetes Laminat, hergestellt aus der Zusammensetzung, eine Glasübergangstemperatur, T_{g}, im Bereich von 150 °C bis 220 °C und einen Verlustfaktor D_{f} von weniger als 0,015 bei 1 GHz Testfrequenz aufweist.

2. Zusammensetzung gemäß Anspruch 1, ferner beinhaltend ein Lösungsmittel in einer Menge im Bereich von 30 bis 60 Gewichtsprozent, bezogen auf das Gesamtgewicht der Zusammensetzung.

3. Zusammensetzung gemäß Anspruch 1, wobei die halogenhaltige Verbindung ausgewählt ist aus der Gruppe, bestehend aus Tetrabrombisphenol A (TBBA) und Tetrabrombisphenol F.

4. Zusammensetzung gemäß Anspruch 1, wobei das Epoxidharz durch das In-Kontakt-Bringen eines Glycidylethers mit einer Bisphenolverbindung zur Bildung von Oxazolidinonteilen erzeugt wird.

5. Zusammensetzung gemäß Anspruch 4, wobei das Epoxidharz durch das In-Kontakt-Bringen eines Glycidylethers mit einer Bisphenolverbindung und einem Polyisocyanat erzeugt wird.

6. Zusammensetzung gemäß Anspruch 1, wobei das Epoxidharz ausgewählt ist aus der Gruppe, bestehend aus einem phenolischen Epoxidharz, einem Novolak-Epoxidharz, einem Benzoxazinharz, einem Arylcyanatharz, einem Aryltriazinharz, einem Maleimidharz, und Kombinationen aus beliebigen zwei oder mehreren davon.

7. Ein Lack, erzeugt aus der Zusammensetzung gemäß Anspruch 1.

8. Ein Prepreg, hergestellt aus dem Lack gemäß Anspruch 7.

9. Ein Elektrolaminat, hergestellt aus dem Lack gemäß Anspruch 7.

10. Eine Leiterplatte, hergestellt aus dem Lack gemäß Anspruch 7.

11. Eine Beschichtung, hergestellt aus dem Lack gemäß Anspruch 7.

12. Ein Verbundstoff, hergestellt aus dem Lack gemäß Anspruch 7.

13. Ein Guss, hergestellt aus dem Lack gemäß Anspruch 7.

14. Ein Klebstoff, hergestellt aus dem Lack gemäß Anspruch 7.

## Revendications

1. Une composition comprenant :
a) une résine époxy ; et
b) un durcisseur comprenant un copolymère : i) d'un anhydride éthyléniquement insaturé, et ii) d'un composé vinyle, dans laquelle ledit composé vinyle est le styrène ou un dérivé de styrène et dans laquelle ledit copolymère a une teneur en anhydride inférieure à 15 pour cent en poids, rapporté au poids total dudit copolymère ;
dans laquelle ladite composition est préparée à partir d'un composé contenant de l'halogène, et
dans laquelle ledit copolymère est présent dans une quantité comprise dans la gamme allant de 10 pour cent en poids à 90 pour cent en poids, rapporté au poids total de ladite composition ;
dans laquelle un stratifié entièrement durci préparé à partir de ladite composition a une température de transition vitreuse, T_{g}, comprise dans la gamme allant de 150 °C à 220 °C et un facteur de dissipation D_{f} inférieur à 0,015 à une fréquence d'essai de 1 GHz.

2. Une composition conformément à la revendication 1 comprenant en outre un solvant dans une quantité comprise dans la gamme allant de 30 à 60 pour cent en poids, rapporté au poids total de ladite composition.

3. Une composition conformément à la revendication 1 dans laquelle ledit composé contenant de l'halogène est sélectionné dans le groupe constitué de tétrabromobisphénol A (TBBA) et de tétrabromobisphénol F.

4. Une composition conformément à la revendication 1 dans laquelle ladite résine époxy est produite en mettant en contact un éther glycidylique avec un composé bisphénol pour former des groupements oxazolidinone.

5. Une composition conformément à la revendication 4 dans laquelle ladite résine époxy est produite en mettant en contact un éther glycidylique avec un composé bisphénol et un polyisocyanate.

6. Une composition conformément à la revendication 1 dans laquelle ladite résine époxy est sélectionnée dans le groupe constitué d'une résine époxy phénolique, d'une résine époxy novolaque, d'une résine benzoxazine, d'une résine cyanate d'aryle, d'une résine triazine d'aryle, d'une résine maléimide, et de combinaisons de deux résines quelconques ou plus de celles-ci.

7. Un vernis produit à partir de la composition de la revendication 1.

8. Un préimprégné préparé à partir du vernis de la revendication 7.

9. Un stratifié électrique préparé à partir du vernis de la revendication 7.

10. Une carte de circuit imprimé préparée à partir du vernis de la revendication 7.

11. Un revêtement préparé à partir du vernis de la revendication 7.

12. Un composite préparé à partir du vernis de la revendication 7.

13. Une coulée préparée à partir du vernis de la revendication 7.

14. Un adhésif préparé à partir du vernis de la revendication 7.
